# EUROPEAN PATENT APPLICATION

(11) **EP 4 847 886 A1**
(43) Date of publication of application: **02.12.2026**
(21) Application number: 25745240.9
(22) Date of filing: 24.01.2025
(51) Int. Cl.: G01F 1/00, G01F 1/66

(54) **TAP WATER METER**

(30) Priority: 24.01.2024 JP 2024008805
(71) Applicant: Panasonic Intellectual Property Management Co., Ltd., Kadoma-shi, Osaka 571-0057 (JP)
(72) Inventor: FUJII, Yuji, Osaka 571-0057 (JP); NAKABAYASHI, Yuuji, Osaka 571-0057 (JP); KOREKUNI, Jin, Osaka 571-0057 (JP); MATSUDA, Masataka, Osaka 571-0057 (JP); TAKAKURA, Yuya, Osaka 571-0057 (JP)
(74) Representative: SSM Sandmair
(86) International application number: PCT/JP2025/002143
(87) International publication number: WO 2025/159171

(57) **Abstract**

A water meter includes: a first ultrasonic transceiver and a second ultrasonic transceiver that are located at a measurement passage and transmit and receive an ultrasonic signal; a flow rate measurer that measures a flow rate of a fluid in the measurement passage based on the signal received by the first ultrasonic transceiver or the second ultrasonic transceiver; and a minute leakage detector. When the flow rate measured by the flow rate measurer is a threshold or less, the minute leakage detector detects minute leakage of the fluid in the measurement passage based on flow rates obtained by measuring the flow rate a plurality of times consecutively at second intervals in a detection period, each second interval being shorter than a first interval.

## Description

### Technical Field

The present disclosure relates to a water meter.

### Background Art

In general, a house is provided with a water meter that measures the amount of water used. Water taken in from a service pipe extending from a common pipe of a water supply system passes through the water meter and then flows to a water supply pipe that supplies the water to a toilet, a lavatory, and the like. Most water meters include, for example, an impeller-type configuration, measure the flow rate of water, and have a function of charging a water fee. However, in recent years, the introduction of water meters that employ an electronic measurement method has been promoted.

### Citation List

### Patent Literature

PTL 1: Japanese Laid-Open Patent Application Publication No. 2003-139590

### Summary of Invention

### Technical Problem

Meanwhile, as the water meters, ultrasonic water meters have been increasingly adopted to detect minute water leakage caused by aging of water supply pipes or deterioration of gaskets at connection portions. However, since the service pipe and the water supply pipe at a first consumer's place communicate, through the common pipe, with the service pipe and the water supply pipe at a second consumer's place, there has been a problem that it is difficult to detect the minute water leakage with a high degree of accuracy due to acoustic noise generated when water is used at the second consumer's place.

An object of the present disclosure is to provide a water meter capable of detecting minute water leakage with a high degree of accuracy.

### Solution to Problem

A water meter according to the present disclosure includes: a first ultrasonic transceiver and a second ultrasonic transceiver that are located at a measurement passage and transmit and receive an ultrasonic signal; a flow rate measurer that measures a flow rate of a fluid in the measurement passage based on the signal received by the first ultrasonic transceiver or the second ultrasonic transceiver; and a minute leakage detector. When the flow rate measured by the flow rate measurer is a threshold or less, the minute leakage detector detects minute leakage of the fluid in the measurement passage based on flow rates obtained by measuring the flow rate a plurality of times consecutively at second intervals in a detection period, each second interval being shorter than a first interval.

According to the present disclosure, the minute leakage is detected based on the flow rates obtained by measuring the flow rate a plurality of times consecutively at the second intervals in the detection period, each second interval being shorter than each first interval. For example, the amounts of minute leakage detected in the respective second intervals in the detection period may be averaged, and whether or not the minute leakage is present may be determined based on this averaged amount. This suppresses an influence of the acoustic noise (such as acoustic noise based on vibrations when water is used at the second consumer's place) which may change periodically, as compared to when the minute leakage is detected at the first intervals. Therefore, the minute leakage may be detected with a high degree of accuracy.

In the above disclosure, the water meter may further include a noise detector that detects an output voltage of the first ultrasonic transceiver, a period of the output voltage of the first ultrasonic transceiver, an output voltage of the second ultrasonic transceiver, and a period of the output voltage of the second ultrasonic transceiver. The minute leakage detector may detect the minute leakage in the detection period that is equal to or longer than the period.

According to the above configuration, since the detection period is equal to or longer than the above period, the influence of the acoustic noise may be further suppressed.

In the above disclosure, the noise detector may compare the output voltage with a predetermined value to determine the presence or absence of acoustic noise generated when water is used at a second consumer's place, and when the noise detector determines that the acoustic noise is absent, the minute leakage detector may detect the minute leakage.

According to the above configuration, since the minute leakage is detected when the acoustic noise is not detected, the detection accuracy of the minute leakage improves.

In the above disclosure, the water meter may further include a transmitter that is communicably connected to a central device, transmits an alarm to the central device when the acoustic noise continues for a predetermined period, and transmits information on the output voltage and the period.

According to the above configuration, since the transmitter transmits the alarm to the central device and transmits the information on the above output voltage and the above period, the central device can recognize that detecting the minute leakage in the water meter is difficult due to the influence of the acoustic noise.

### Advantageous Effects of Invention

According to the present disclosure, a water meter capable of detecting minute water leakage with a high degree of accuracy can be provided.

### Brief Description of Drawings

FIG. 1 is a configuration diagram of a water leakage detection system.
FIG. 2 is a configuration diagram of a water meter.
FIG. 3A is a diagram showing measurement intervals in a normal flow rate measurement by a flow rate measurer. FIG. 3B is a diagram showing detection intervals in a detection period by a minute leakage detector.
FIG. 4A is a diagram showing a change over time in a voltage between terminals of an ultrasonic transceiver when no water is used at a second consumer's place. FIG. 4B is a diagram showing a change over time in the voltage between the terminals of the ultrasonic transceiver when water is used at the second consumer's place. FIG. 4C is an explanatory diagram regarding the detection period.

### Description of Embodiments

Hereinafter, a water meter according to an embodiment of the present disclosure will be described with reference to the drawings. The water meter described below is merely one embodiment of the present disclosure. Therefore, the present disclosure is not limited to the following embodiment, and additions, deletions, and modifications may be made within the scope of the present disclosure.

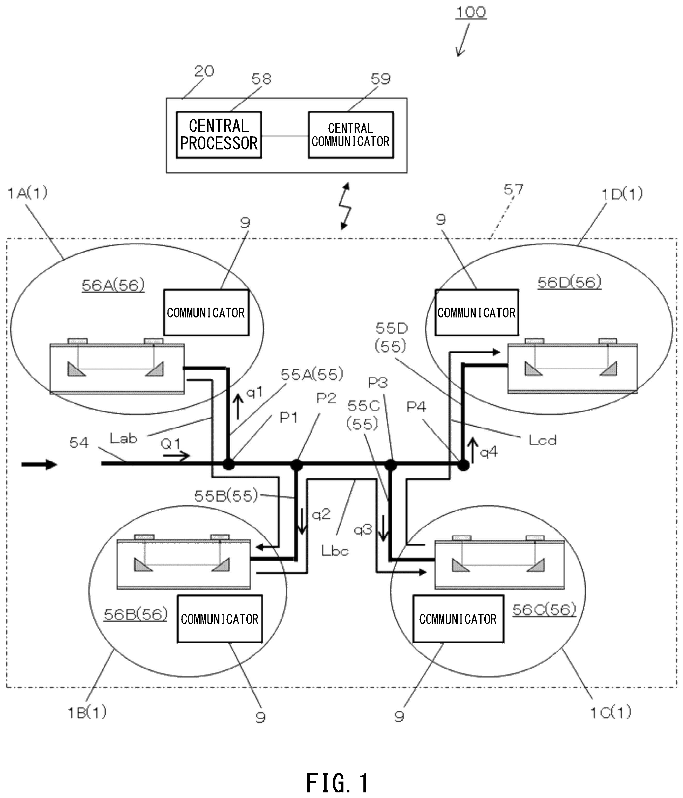

As shown in FIG. 1, a water leakage detection system 100 according to the present embodiment includes: one or a plurality of consumers' places 56 included in a target area 57 for water leakage detection; and a central device 20.

In the water leakage detection system 100, a common pipe 54 is connected to one end of a main pipe (not shown) including the other end connected to a water supply facility. The common pipe 54 extends toward the target area 57, and a plurality of service pipes 55 extend from the common pipe 54 so as to correspond to the consumers' places 56. Downstream ends of the service pipes 55 are connected to the respective consumers' places 56. According to this configuration, water from the water supply facility is supplied through the main pipe, the common pipe 54, and the service pipes 55 to the consumers' places 56. Each consumer's place 56 includes a water meter 1 constituted by an ultrasonic flowmeter. In FIG. 1, consumers' places 56A, 56B, 56C, and 56D are exemplified as the four consumers' places 56, and water meters 1A, 1B, 1C, and 1D are identified and shown as the water meters 1 of the consumers' places 56A, 56B, 56C, and 56D. The configuration of the water meter 1 will be described later in detail.

The central device 20 has a function of communicating with the water meters 1 to receive meter reading data of the measured flow rate and the like and issue various instructions to the water meters 1. A communication method between the central device 20 and each water meter 1 is, for example, cellular communication, specified low-power wireless communication, or network communication via a relay station, but is not especially limited. The central device 20 includes a central processor 58 and a central communicator 59. The central communicator 59 communicates with below-described communicators 9 included in the respective water meters 1. The central processor 58 determines the presence or absence of water leakage from a passage of a water supply network 60 based on water temperatures and water pressures in the passage which are acquired by the water meters 1 of the consumers' places 56, the water temperatures and the water pressures being obtained through the central communicator 59.

Next, water leakage determination by the water leakage detection system 100 in the target area 57 for water leakage detection will be described.

The water meter 1A is connected to the common pipe 54 by the service pipe 55A, and the water meter 1B is connected to the common pipe 54 by the service pipe 55B. The water meter 1C is connected to the common pipe 54 by the service pipe 55C, and the water meter 1D is connected to the common pipe 54 by the service pipe 55D. Moreover, branch points of the service pipes 55A to 55C with respect to the common pipe 54 are denoted by P1 to P3. The service pipe 55D is connected to a downstream end P4 of the common pipe 54.

A pipe route from the water meter 1A to the water meter 1B is denoted by Lab. A pipe route from the water meter 1B to the water meter 1C is denoted by Lbc. A pipe route from the water meter 1C to the water meter 1D is denoted by Lcd. Moreover, the flow rates of water flowing through the service pipes 55A to 55D, which are measured by below-described flow rate measurers 3 of the water meters 1A to 1D, are denoted by q1 to q4. Furthermore, the flow rate at the branch point P1 of the common pipe 54 is denoted by Q1. The flow rate Q1 is the sum of the flow rates q1 to q4.

The central processor 58 of the central device 20 receives the flow rates q1 to q4 from the water meters 1A to 1D through the central communicator 59. Then, the central processor 58 determines whether or not each of the flow rates q1 to q4 measured by the water meters 1A to 1D is a threshold or less, and also determines whether or not the flow rate (i.e., the flow rate Q1) of water flowing into the target area 57 is a threshold or less stored in the central communicator 59. When each of the flow rates q1 to q4 is the threshold or less, and the flow rate Q1 is the threshold or less, the central processor 58 executes processing of determining the presence or absence of the water leakage.

The central processor 58 receives, through the central communicator 59, the flow rates of water detected by the water meters 1A to 1D. Then, the central processor 58 determines the presence or absence of the water leakage by comparing the flow rates measured by the water meters 1A to 1D with the threshold. In this case, the central processor 58 determines that, for example, the water leakage is occurring in the vicinity of the water meter 1 in which the difference between the flow rate and the threshold is the largest. For example, when the above difference for the water meter 1A is the largest, it is estimated that the water leakage is likely occurring in the pipe route Lab. Moreover, when the above difference for the water meter 1B or the water meter 1C is the largest, it is estimated that the water leakage is likely occurring in the pipe route Lbc. Furthermore, when the above difference for the water meter 1D is the largest, it is estimated that the water leakage is likely occurring in the pipe route Lcd.

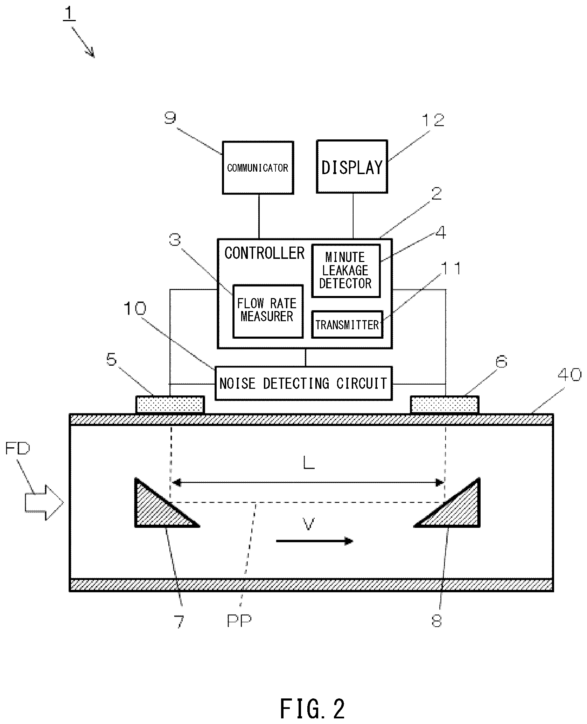

Next, the configuration of the water meter 1 will be described in detail. FIG. 2 is a diagram showing the configuration of the water meter 1.

As shown in FIG. 2, the water meter 1 includes a controller 2, a first ultrasonic transceiver 5, a second ultrasonic transceiver 6, a first reflector 7, a second reflector 8, the communicator 9, a noise detecting circuit 10, a transmitter 11, a display 12, and a measurement passage 40. Although not shown, the water meter 1 may further include storage. Moreover, the controller 2 includes, as functional components, a flow rate measurer 3, a minute leakage detector 4, and the transmitter 11. In the present embodiment, the noise detecting circuit 10 corresponds to a noise detector.

The controller 2 includes at least one of a processor, such as a CPU, or an integrated circuit, such as an ASIC. The controller 2 controls operations of the first ultrasonic transceiver 5 and the second ultrasonic transceiver 6. The controller 2 is electrically connected to the communicator 9, the noise detecting circuit 10, and the display 12. The flow rate measurer 3, the minute leakage detector 4, and the transmitter 11 are functionally realized by the controller 2 executing a predetermined program.

The flow rate measurer 3 measures the flow rate of water based on a propagation time measured based on an ultrasonic signal transmitted from one of the first ultrasonic transceiver 5 and the second ultrasonic transceiver 6 and received by the other of the first ultrasonic transceiver 5 and the second ultrasonic transceiver 6.

The flow rate measurer 3 measures the propagation time of the ultrasonic wave between one of the first ultrasonic transceiver 5 and the second ultrasonic transceiver 6 and the other of the first ultrasonic transceiver 5 and the second ultrasonic transceiver 6. In this case, the flow rate measurer 3 specifies a zero cross point at which a voltage of an amplified signal of a received signal received by the reception-side ultrasonic transceiver first changes from positive to negative after the voltage of the amplified signal exceeds a reference voltage. The zero cross point indicates a time point at which the ultrasonic wave transmitted by the transmission-side ultrasonic transceiver is received by the reception-side ultrasonic transceiver. Then, the flow rate measurer 3 measures an elapsed time (i.e., the propagation time of the ultrasonic wave) from the application of a pulse wave to the transmission-side ultrasonic transceiver to the zero cross point.

The measurement passage 40 is a water passage that is located inside the water meter 1 and extends in one direction. The first ultrasonic transceiver 5 is located on an upstream side of an outer surface of the measurement passage 40 and transmits the ultrasonic wave in a radial direction of the measurement passage 40, and the second ultrasonic transceiver 6 receives the transmitted ultrasonic wave. The second ultrasonic transceiver 6 is located on a downstream side of the outer surface of the measurement passage 40 and transmits the ultrasonic wave in the radial direction of the measurement passage 40, and the first ultrasonic transceiver 5 receives the transmitted ultrasonic wave.

The first reflector 7 is located on an upstream side in the measurement passage 40 and reflects the ultrasonic wave, transmitted from the first ultrasonic transceiver 5, toward the second reflector 8 by deflecting a traveling direction of the ultrasonic wave by 90°. Moreover, the first reflector 7 reflects the ultrasonic wave, transmitted from the second reflector 8, toward the first ultrasonic transceiver 5 by deflecting the traveling direction of the ultrasonic wave by 90°. Similarly, the second reflector 8 is located on a downstream side in the measurement passage 40. The second reflector 8 reflects the ultrasonic wave, transmitted from the first reflector 7, toward the second ultrasonic transceiver 6 by deflecting the traveling direction of the ultrasonic wave by 90°. Moreover, the second reflector 8 reflects the ultrasonic wave, transmitted from the second ultrasonic transceiver 6, toward the first reflector 7 by deflecting the traveling direction of the ultrasonic wave by 90°.

The communicator 9 communicates with external devices, such as the central communicator 59, and transmits and receives various types of data. Moreover, the display 12 displays various information, such as a meter reading value. In FIG. 2, a reference sign FD indicates a direction in which the water flows, and a reference sign PP indicates a propagation path of the ultrasonic wave.

According to the above configuration, when measuring the flow rate of the water, the controller 2 applies the pulse wave to the first ultrasonic transceiver 5 to make the first ultrasonic transceiver 5 transmit the ultrasonic wave. The transmitted ultrasonic wave propagates in the measurement passage 40 along the propagation path PP through the first reflector 7 and the second reflector 8 and is then received by the second ultrasonic transceiver 6. Similarly, the controller 2 applies the pulse wave to the second ultrasonic transceiver 6 to make the second ultrasonic transceiver 6 transmit the ultrasonic wave. The transmitted ultrasonic wave propagates in the measurement passage 40 along the propagation path PP through the second reflector 8 and the first reflector 7 and is then received by the first ultrasonic transceiver 5.

The flow rate measurer 3 measures the propagation time from a time point at which the ultrasonic wave is transmitted from the first ultrasonic transceiver 5 to a time point at which the ultrasonic wave is received by the second ultrasonic transceiver 6. Moreover, the flow rate measurer 3 measures the propagation time from a time point at which the ultrasonic wave is transmitted from the second ultrasonic transceiver 6 to a time point at which the ultrasonic wave is received by the first ultrasonic transceiver 5.

Here, the flow velocity of a fluid (water) flowing in the direction FD in the measurement passage 40 is represented by V, and the speed of sound in the fluid is represented by C. The length of a linear portion of the propagation path PP of the ultrasonic wave that propagates between the first ultrasonic transceiver 5 and the second ultrasonic transceiver 6 is represented by L. At this time, in the propagation time until the ultrasonic wave transmitted from the first ultrasonic transceiver 5 reaches the second ultrasonic transceiver 6, a propagation time t1 required for the ultrasonic wave to propagate over a distance corresponding to the length L is represented by Formula 1 below.$t 1 = L / \left(C+V\right)$ Formula 1

Next, in the propagation time until the ultrasonic wave transmitted from the second ultrasonic transceiver 6 reaches the first ultrasonic transceiver 5, a propagation time t2 required for the ultrasonic wave to propagate over a distance corresponding to the length L is represented by Formula 2 below.$t 2 = L / \left(C-V\right)$ Formula 2

Formula 3 is obtained by eliminating the speed of sound C in the fluid from Formulas 1 and 2 above. As is clear from Formula 3, when L is known, the flow velocity V can be obtained using the measured propagation times t1 and t2.$V = L / 2 \left(\left(1/t1\right)-\left(1/t2\right)\right)$ Formula 3

Next, as shown in Formula 4 below, a flow rate Q can be obtained by multiplying the flow velocity V by a sectional area S of the measurement passage 40. Thus, the flow rate Q can be calculated. In Formula 4 below, a coefficient k denotes a correction coefficient for correcting various errors that occur during the measurement.$Q = k \times \left(V\times S\right)$ Formula 4

The propagation time of the ultrasonic wave between the first ultrasonic transceiver 5 and the second ultrasonic transceiver 6 includes a propagation time between the first ultrasonic transceiver 5 and the first reflector 7 and a propagation time between the second ultrasonic transceiver 6 and the second reflector 8. However, since these propagation times can be basically calculated without depending on the flow velocity, only the propagation time corresponding to the portion having the length L in the propagation path PP can be calculated.

When the flow rate measured by the flow rate measurer 3 is the threshold or less, the minute leakage detector 4 detects the minute water leakage in the measurement passage 40 at regular intervals (examples thereof include, but are not limited to, every hour and every three hours). As will be described later, the minute leakage detector 4 detects the minute leakage of the fluid in the measurement passage 40 based on flow rates obtained by measuring the flow rate a plurality of times consecutively at second intervals K2 in a detection period DP, each second interval K2 being shorter than a first interval K1. In this case, the minute leakage detector 4 measures the flow rate by a method similar to the above flow rate measurement method performed by the flow rate measurer 3.

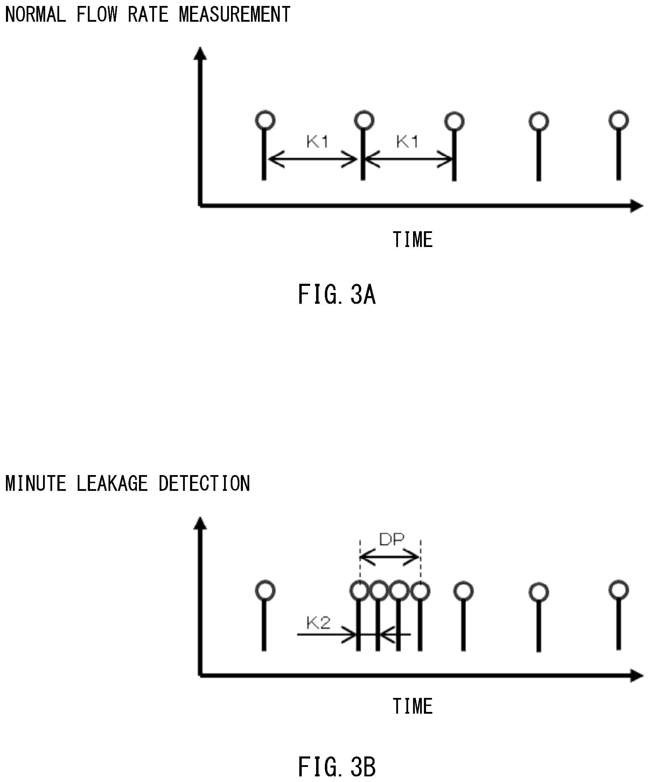

FIG. 3A is a diagram showing measurement intervals in a normal flow rate measurement by the flow rate measurer 3. FIG. 3B is a diagram showing detection intervals in the detection period DP by the minute leakage detector 4. As shown in FIG. 3A, the normal flow rate measurement by the flow rate measurer 3 is performed, for example, at the first intervals K1. In this case, the application of the pulse wave by the controller 2 to the first ultrasonic transceiver 5 or the second ultrasonic transceiver 6 is performed at the first intervals K1. The first interval K1 is, for example one to two seconds. Among the first intervals K1, one first interval K1 and another first interval K1 may be different from each other.

On the other hand, as shown in FIG. 3B, the minute leakage detector 4 detects the above minute leakage at the second intervals K2 in the detection period DP that is a period in which the second intervals K2 are consecutive, the second interval K2 being shorter than the first interval K1 that is the flow rate measurement interval of the flow rate measurer 3. To be specific, the minute leakage detector 4 performs the above detection in the detection period DP that is the period in which the second intervals K2 are consecutive. The second interval K2 is, for example, 0.5 second. Among the second intervals K2, one second interval K2 and another second interval K2 may be different from each other as long as each second interval K2 is shorter than the first interval K1. To be specific, a maximum value of the second interval K2 is smaller than a minimum value of the first interval K1.

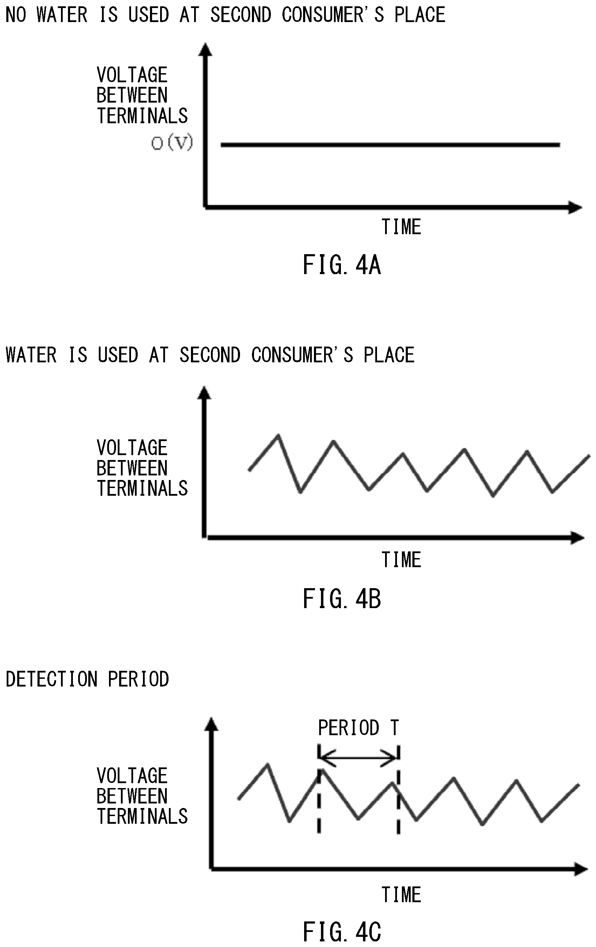

FIG. 4A is a diagram showing a change over time in a voltage (output voltage) between terminals of the first ultrasonic transceiver 5 or the second ultrasonic transceiver 6 when not water is used at a second consumer's place 56. FIG. 4B is a diagram showing a change over time in the voltage between the terminals of the first ultrasonic transceiver 5 or the second ultrasonic transceiver 6 when water is used at the second consumer's place 56. FIG. 4C is an explanatory diagram regarding the detection period DP.

As shown in FIG. 4A, when no water is used at the second consumer's place 56, the voltage between the terminals of the first ultrasonic transceiver 5 or the second ultrasonic transceiver 6 at a first consumer's place 56 remains substantially constant without any change over time.

On the other hand, as shown in FIG. 4B, when water is used at the second consumer's place 56, the voltage between the terminals of the first ultrasonic transceiver 5 or the second ultrasonic transceiver 6 at the first consumer's place 56 changes over time and is not constant due to acoustic noise caused by vibrations associated with the use of water.

The noise detecting circuit 10 detects the output voltage of the first ultrasonic transceiver 5 or the second ultrasonic transceiver 6 and also detects a period T of the output voltage as shown in FIG. 4C. The minute leakage detector 4 detects the minute leakage in the detection period DP that is equal to or longer than the period T detected by the noise detecting circuit 10. In FIG. 4C, the period T is an elapsed time from one peak of the signal waveform to its adjacent peak.

The noise detecting circuit 10 compares the output voltage of the first ultrasonic transceiver 5 or the second ultrasonic transceiver 6 with a predetermined value to determine the presence or absence of the acoustic noise generated when water is used at the second consumer's place 56. In this case, when a plurality of peaks of the signal waveform in FIG. 4B are equal to or larger than the predetermined value, the noise detecting circuit 10 may determine that the acoustic noise is present. Then, when the noise detecting circuit 10 determines that the acoustic noise is absent, the minute leakage detector 4 may detect the minute leakage.

When the acoustic noise continues for a predetermined period, the transmitter 11 transmits an alarm to the central processor 58 through the communicator 9 and transmits information on the above output voltage and the above period T. The above predetermined period is, for example, a period from several hours to several days.

As described above, in the water meter 1 according to the present embodiment, the minute leakage is detected in the detection period DP in which the second intervals K2 are consecutive, each second interval K2 being shorter than the first interval K1. For example, the amounts of minute leakage detected in the respective second intervals K2 in the detection period DP may be averaged, and whether or not the minute leakage is present may be determined based on this averaged amount. This suppresses an influence of the acoustic noise (such as acoustic noise based on vibrations when water is used at the second consumer's place 56) which may change periodically, as compared to when the minute leakage is detected at the first intervals K1. Therefore, the minute leakage may be detected with a high degree of accuracy.

Moreover, in the present embodiment, the minute leakage detector 4 may detect the minute leakage in the detection period DP that is equal to or longer than the above period T. When the detection period DP is equal to or longer than the period T, the influence of the acoustic noise may be further suppressed.

Moreover, in the present embodiment, the noise detecting circuit 10 may compare the above output voltage with the predetermined value to determine the presence or absence of the acoustic noise generated when water is used at the second consumer's place 56, and the minute leakage detector 4 may detect the minute leakage when it is determined that the acoustic noise is absent. Thus, since the minute leakage is detected when the acoustic noise is not detected, the detection accuracy of the minute leakage improves.

Furthermore, in the present embodiment, when the acoustic noise continues for the predetermined period, the transmitter 11 transmits the alarm to the central device 20 and transmits the information on the above output voltage and the above period T. Thus, the central device 20 can recognize that detecting the minute leakage in the water meter 1 is difficult due to the influence of the acoustic noise.

The present disclosure is not limited to the above embodiment, and various modifications may be made within the scope of the present disclosure. Examples are as follows.

In the above embodiment, the central device 20 includes the central processor 58. However, the above embodiment is not limited to this. The central processor 58 may be located in one of the water meters 1 in the target area 57.

Moreover, the installation location of the central device 20 is not especially limited. For example, the central device 20 may be located together with the water supply facility.

Moreover, in the above embodiment, the common pipe 54 typically has a constant sectional area, and the flow rate decreases toward a downstream side of the common pipe 54. Therefore, the flow rate at the branch point P1 may be used as the flow rate in the common pipe 54.

Moreover, in the above embodiment, four water meters 1 are connected to the common pipe 54. However, the above embodiment is not limited to this. The number of water meters 1 connected to the common pipe 54 may be, for example, three or less or may be five or more.

Moreover, in the above embodiment, the water meter 1 includes two reflectors that are the first reflector 7 and the second reflector 8. However, the above embodiment is not limited to this. The number of reflectors may be, for example, one or may be three or more.

Furthermore, the above embodiment describes water leakage as an example. However, factors, such as entrainment of air bubbles or foreign matter, which affect the propagation time can also be detected in the same manner.

### Reference Signs List

- 1, 1A, 1B, 1C, 1D: water meter
- 2: controller
- 3: flow rate measurer
- 5: first ultrasonic transceiver
- 6: second ultrasonic transceiver
- 7: first reflector
- 8: second reflector
- 9: communicator
- 10: noise detecting circuit
- 11: transmitter
- 12: display
- 20: central device
- 40: measurement passage
- 54: common pipe
- 55: service pipe
- 56: consumer's place
- 57: target area
- 58: central processor
- 59: central communicator
- 100: water leakage detection system

## Claims

1. A water meter comprising:
a first ultrasonic transceiver and a second ultrasonic transceiver that are located at a measurement passage and transmit and receive an ultrasonic signal;
a flow rate measurer that measures a flow rate of a fluid in the measurement passage at first intervals based on the signal received by the first ultrasonic transceiver or the second ultrasonic transceiver; and
a minute leakage detector, wherein
when the flow rate measured by the flow rate measurer is a threshold or less, the minute leakage detector detects minute leakage of the fluid in the measurement passage based on flow rates obtained by measuring the flow rate a plurality of times consecutively at second intervals in a detection period, each second interval being shorter than each first interval.

2. The water meter according to claim 1, further comprising a noise detector that detects an output voltage of the first ultrasonic transceiver, a period of the output voltage of the first ultrasonic transceiver, an output voltage of the second ultrasonic transceiver, and a period of the output voltage of the second ultrasonic transceiver, wherein
the minute leakage detector detects the minute leakage in the detection period that is equal to or longer than the period.

3. The water meter according to claim 2, wherein:
the noise detector compares the output voltage with a predetermined value to determine the presence or absence of acoustic noise generated when water is used at a second consumer's place; and
when the noise detector determines that the acoustic noise is absent, the minute leakage detector detects the minute leakage.

4. The water meter according to claim 3, further comprising a transmitter that is communicably connected to a central device, transmits an alarm to the central device when the acoustic noise continues for a predetermined period, and transmits information on the output voltage and the period.
